(19) Europäisches Patentamt
European Patent Office
Office européen des brevets

(11) **EP 3 304 214 B1**

(12) **FASCICULE DE BREVET EUROPEEN**

(45) Date de publication et mention de la délivrance du brevet:
**04.01.2023 Bulletin 2023/01**

(21) Numéro de dépôt: **16733151.1**

(22) Date de dépôt: **26.05.2016**

(51) Classification Internationale des Brevets (IPC):
**G03H 1/08** (2006.01)    **G03H 1/04** (2006.01)
**G03H 1/22** (2006.01)    **G03H 1/26** (2006.01)
**G01N 15/14** (2006.01)

(52) Classification Coopérative des Brevets (CPC):
**G03H 1/0866; G03H 1/0443;** G03H 2001/0447;
G03H 2001/0454; G03H 2001/0471;
G03H 2001/0816; G03H 2001/2263;
G03H 2001/266; G03H 2210/13; G03H 2222/13;
G03H 2222/18; G03H 2240/62

(86) Numéro de dépôt international:
**PCT/FR2016/051250**

(87) Numéro de publication internationale:
**WO 2016/189257 (01.12.2016 Gazette 2016/48)**

(54) **PROCÉDÉ D'OBSERVATION D'UN ÉCHANTILLON**

VERFAHREN ZUR BEOBACHTUNG EINER PROBE

METHOD FOR OBSERVING A SAMPLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.05.2015 FR 1554811**

(43) Date de publication de la demande:
**11.04.2018 Bulletin 2018/15**

(73) Titulaire: **Commissariat à l'énergie atomique et aux énergies alternatives**
**75015 Paris (FR)**

(72) Inventeurs:
• **ALLIER, Cédric**
**38000 Grenoble (FR)**
• **BORDY, Thomas**
**38000 Grenoble (FR)**
• **CIONI, Olivier**
**38100 Grenoble (FR)**
• **HERVE, Lionel**
**38700 Corenc (FR)**
• **MOREL, Sophie**
**59500 Douai (FR)**

(74) Mandataire: **INNOV-GROUP**
**310, avenue Berthelot**
**69372 Lyon Cedex 08 (FR)**

(56) Documents cités:
**WO-A1-2015/015023     FR-A1- 3 047 077**

• **PENG BAO ET AL: "Optical surface profile measurement using phase retrieval by tuning the illumination wavelength", OPTICS COMMUNICATIONS., vol. 285, no. 24, 23 août 2012 (2012-08-23), pages 5029-5036, XP055269908, NL ISSN: 0030-4018, DOI: 10.1016/j.optcom.2012.08.018**
• **YAN LI YAN LI ET AL: "Phase retrieval from double axially displaced holograms for dual-wavelength in-line holography", CHINESE OPTICS LETTERS, vol. 12, no. 2, 27 janvier 2014 (2014-01-27), page 020901, XP055269833, CN ISSN: 1671-7694, DOI: 10.3788/COL201412.020901**

• **DANIEL W E NOOM ET AL: "Lensless phase contrast microscopy based on multiwavelength Fresnel diffraction", OPTICS LETTERS, OPTICAL SOCIETY OF AMERICA, US, vol. 39, no. 2, 15 janvier 2014 (2014-01-15), pages 193-196, XP001587214, ISSN: 0146-9592, DOI: 10.1364/OL.39.000193 cité dans la demande**

**Description**

## DOMAINE TECHNIQUE

Le domaine technique de l'invention est lié à l'observation d'un échantillon, en particulier un échantillon biologique, par imagerie sans lentille, en mettant en œuvre un algorithme de reconstruction holographique aux performances améliorées.

## ART ANTERIEUR

L'observation d'échantillons, et en particulier des échantillons biologiques, par imagerie sans lentille connaît un développement important depuis ces dix dernières années. Cette technique permet d'observer un échantillon en le disposant entre une source de lumière et un photodétecteur matriciel, sans disposer de lentille de grossissement optique entre l'échantillon et le photodétecteur. Ainsi, le photodétecteur collecte une image de l'onde lumineuse transmise par l'échantillon.

Cette image est formée de figures d'interférence entre l'onde lumineuse émise par la source et transmise par l'échantillon, et des ondes de diffraction, résultant de la diffraction par l'échantillon de l'onde lumineuse émise par la source. Ces figures d'interférences sont parfois dénommées figures de diffraction, ou désignées par le terme anglais « diffraction pattern ».

Le document WO2008090330 décrit un dispositif permettant l'observation d'échantillons biologiques, en l'occurrence des cellules, par imagerie sans lentille. Le dispositif permet d'associer, à chaque cellule, une figure d'interférence dont la morphologie permet d'identifier le type de cellule. L'imagerie sans lentille apparaît alors comme une alternative simple, et peu onéreuse, à un microscope classique. De plus, son champ d'observation est nettement plus important que ne peut l'être celui d'un microscope. On comprend alors que les perspectives d'application liées à cette technologie sont importantes. Ce document mentionne également la possibilité d'illuminer l'échantillon à l'aide de sources de lumière de différentes longueurs d'onde.

Le document US2012/0218379, postérieur au document précédent, reprend l'essentiel des enseignements de WO2008090330, tout en mentionnant la possibilité d'utiliser un photodétecteur matriciel couleur, mais l'information couleur est ensuite traitée pour former une image monochrome.

D'une façon générale, l'image formée sur le photodétecteur matriciel, comportant des figures d'interférence, peut être traitée par un algorithme de propagation numérique, de manière à estimer des propriétés optiques de l'échantillon. De tels algorithmes sont bien connus dans le domaine de la reconstruction holographique. Pour cela, la distance entre l'échantillon et le photodétecteur étant connue, on applique un algorithme de propagation, prenant en compte cette distance, ainsi que la longueur d'onde. On peut alors reconstituer une image d'une propriété optique de l'échantillon. Un algorithme de reconstruction numérique est par exemple décrit dans US2012/0218379.

Il est également connu que de tels algorithmes peuvent générer une image affectée d'un bruit de fond important, qualifié par le terme anglais « Twin Image », signifiant « image jumelle ». Un tel bruit est dû au fait que l'image de départ, formée par le photodétecteur, ne contient qu'une information partielle quant à l'onde lumineuse collectée par le photodétecteur. En effet, une image ne donne qu'une information relative à la partie réelle de l'onde lumineuse, obtenue par l'intensité mesurée. Mais une telle image ne comporte pas d'information relative à la partie imaginaire de l'onde lumineuse à laquelle est exposé le détecteur, en particulier sa phase. L'algorithme de reconstruction utilise donc une information incomplète, ce qui se traduit par l'apparition d'un bruit sur l'image reconstruite.

Un tel bruit de fond peut compliquer l'interprétation des images reconstruites par propagation numérique ; il est important d'en diminuer l'influence par des algorithmes appropriés.

Pour ce faire, la publication « Lensless phase contrast microscopy based on multiwavelength Fresnel diffraction », Optics Letters Vol. 39, N°2, 15 janvier 2014, décrit un algorithme permettant d'améliorer la qualité des images reconstruites. Cette publication décrit un dispositif d'imagerie sans lentille basé sur l'utilisation de trois sources de lumière de longueurs d'onde différentes (respectivement 685 nm, 785 nm, 940 nm). L'échantillon est illuminé successivement par ces trois sources de lumière. Le photodétecteur acquiert alors autant d'images que de sources de lumière, ces images étant formées dans un plan, dit plan du détecteur, selon lequel s'étend le capteur. A chaque image correspond une longueur d'onde.

Une première image, d'une première longueur d'onde, est rétropropagée, selon ladite première longueur d'onde, dans un plan selon lequel s'étend l'objet, dit plan de l'objet, de façon à obtenir, dans ce plan objet, un premier champ complexe. La phase de ce premier champ complexe, dans le plan objet, est multipliée par un ratio entre la première longueur d'onde et une deuxième longueur d'onde. Ce champ complexe est alors propagé, selon ladite deuxième longueur d'onde, du plan objet vers le plan du détecteur, suite à quoi son module est remplacé par le module de l'image acquise à ladite deuxième longueur d'onde. Il est alors rétropropagé dans le plan de l'objet, pour une deuxième itération. Le procédé itératif se poursuit jusqu'à une l'atteinte d'un critère de convergence. Le document WO2014035238, dont certains inventeurs sont les auteurs de la publication évoquée ci-dessus, comporte les mêmes enseignements.

La publication Bao P,« Optical surface profile measurement using phase retrieval by tuning the illumination wavelenght », Optics Communications 285, 5029-5036, 2012 décrit un algorithme itératif permettant une reconstruction d'une surface tridimensionnelle d'un objet transparent à partir d'une image acquise par un capteur d'image dans une configuration sans lentille. Cet algorithme vise à illuminer un objet à l'aide de deux longueurs d'onde. L'image acquise par le capteur d'image, à chaque longueur d'onde, est propagée dans un plan de l'objet. On estime ensuite une différence de phases, à chacune de ces longueurs d'onde, dans le plan objet. La surface tridimensionnelle est reconstruite à partir de la différence de phase ainsi estimée.

Le document WO2015/015023 décrit un algorithme itératif de reconstruction holographique basé sur un capteur d'image couleur dans une configuration sans lentille. Selon cet algorithme, l'échantillon est illuminé par une source de lumière polychromatique. L'image acquise est décomposée en différentes composantes spectrales. Chaque composante est rétropropagée dans un plan selon lequel s'étend l'échantillon, la propagation des composantes étant réalisée selon différentes distances les unes des autres. Ce document décrit ensuite un mélange des spectres de chaque hologramme dans le domaine de Fourier, permettant de générer une image unique, cette dernière étant utilisée dans une boucle d'itération suivante.

Les inventeurs proposent une méthode alternative à celles proposées dans les publications précédentes, permettant une estimation fiable des propriétés optiques d'un échantillon.

## EXPOSE DE L'INVENTION

Un premier objet de l'invention est un procédé d'observation d'un échantillon tel que selon la revendication indépendante 1. Un autre objet de l'invention est un dispositif d'observation d'un échantillon tel que selon la revendication indépendante 11. D'autres aspects de l'invention sont présentés dans les revendications dépendantes.

## FIGURES

La figure 1 représente un premier exemple de dispositif pour la mise en œuvre de l'invention, l'échantillon analysé étant une lame d'anatomopathologie.

La figure 2 représente un premier exemple de dispositif pour la mise en œuvre de l'invention, l'échantillon analysé étant un liquide corporel comportant des particules.

La figure 3 représente le plan de détection, sur lequel une image est formée, ainsi que le plan de l'échantillon. Cette figure illustre également les liens entre les principales grandeurs mises en œuvre dans les différents modes de réalisation exposés.

La figure 4 représente un logigramme décrivant l'enchaînement des principales étapes d'un procédé itératif de reconstruction.

La figure 5 représente un deuxième exemple de dispositif pour la mise en œuvre de l'invention, l'échantillon analysé étant une lame d'anatomopathologie.

Les figures 6A, 6B et 6C représentent des images reconstruites, dans un plan de l'échantillon, dans une première bande spectrale, selon un algorithme de reconstruction itératif, ces images étant respectivement obtenues suite à un nombre d'itérations respectivement égal à 1, 3 et 10.

Les figures 7A, 7B et 7C représentent des images reconstruites, dans un plan de l'échantillon, dans une deuxième bande spectrale, selon un algorithme de reconstruction itératif, ces images étant respectivement obtenues suite à un nombre d'itérations respectivement égal à 1, 3 et 10.

Les figures 8A, 8B et 8C représentent des images reconstruites, dans un plan de l'échantillon, dans une troisième bande spectrale, selon un algorithme de reconstruction itératif, ces images étant respectivement obtenues suite à un nombre d'itérations respectivement égal à 1, 3 et 10.

Les figures 9A, 9B et 9C représentent des images composites, obtenues par combinaison des images reconstruites dans la première, la deuxième et la troisième bande spectrales, ces images correspondant respectivement à 1, 3 et 10 itérations. Ces images sont des images en couleur, représentées ici en noir et blanc.

## EXPOSE DE MODES DE REALISATION PARTICULIERS

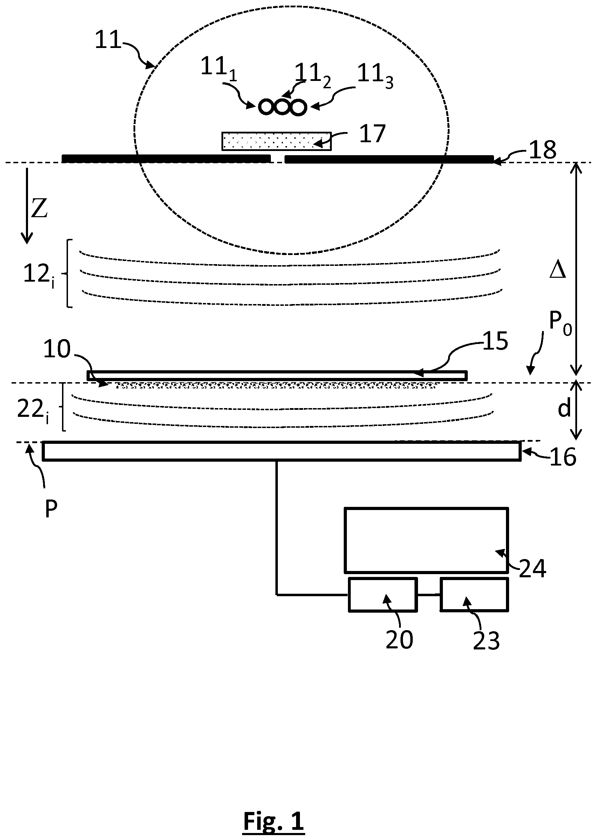

La figure 1 représente un exemple de dispositif objet de l'invention. Une source de lumière 11 est apte à produire une onde lumineuse 12, dite onde lumineuse incidente, en direction d'un échantillon 10, selon un axe de propagation Z.

L'échantillon 10 peut être un échantillon biologique que l'on souhaite caractériser. Il peut par exemple s'agir d'une lame de tissu, ou lame d'anatomopathologie, comportant une fine épaisseur de tissu déposée sur une lame transparente 15. Par fine épaisseur, on entend une épaisseur de préférence inférieure à 100 $\mu$m, et de préférence inférieure à 10 $\mu$m, typiquement quelques micromètres. Un tel échantillon est représenté sur la figure 1. On observe que l'échantillon s'étend selon un plan $P_0$, dit plan de l'échantillon, perpendiculaire à l'axe de propagation Z.

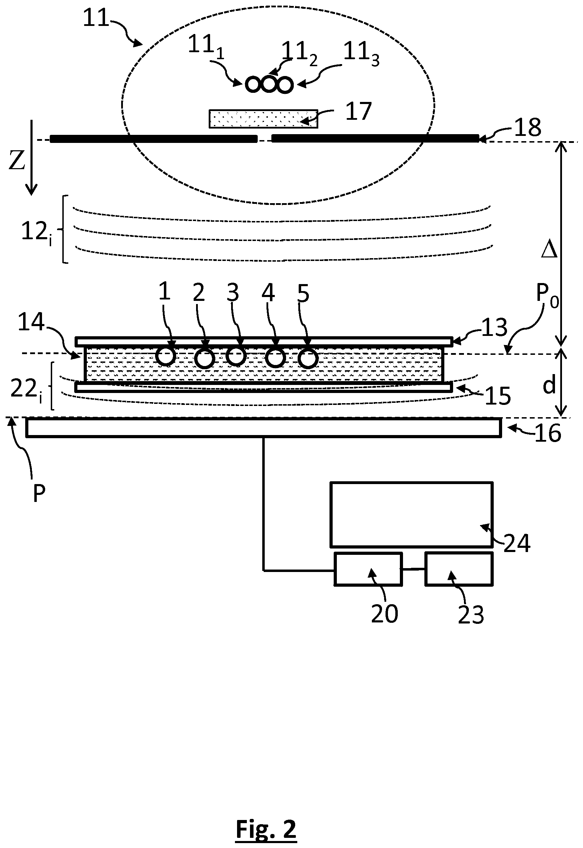

L'échantillon 10 peut également comporter un milieu 14, solide ou liquide, comportant des particules 1, 2, 3, 4, 5 à caractériser, un tel cas de figure étant représenté sur la figure 2. Il peut par exemple s'agir de particules biologiques dans un milieu de culture, ou dans un liquide corporel. Par particule biologique, on entend une cellule, une bactérie ou autre microorganisme, un champignon, une spore...Le terme particules peut également désigner des microbilles, par exemple des microbilles métalliques, des microbilles de verre ou des microbilles organiques, couramment mises en œuvre dans des protocoles biologiques. Il peut également s'agir de gouttelettes insolubles baignant dans un milieu liquide, par exemple des gouttelettes lipidiques dans une émulsion de type huile dans eau. Ainsi, le terme particule désigne à la fois des particules endogènes, initialement présentes dans l'échantillon examiné, et des particules exogènes, ajoutées à cet échantillon avant l'analyse.

D'une façon générale, une particule a une taille avantageusement inférieure à 1 mm, voire inférieure à 500 $\mu$m, et de préférence une taille comprise entre 0.5 $\mu$m et 500 $\mu$m.

La distance $\Delta$ entre la source de lumière et l'échantillon est de préférence supérieure à 1 cm. Elle est de préférence comprise entre 2 et 30 cm. De préférence, la source de lumière, vue par l'échantillon, est considérée comme ponctuelle. Cela signifie que son diamètre (ou sa diagonale) est préférentiellement inférieur au dixième, mieux au centième de la distance entre l'échantillon et la source de lumière. Ainsi, de préférence, la lumière parvient à l'échantillon sous la forme d'ondes planes, ou pouvant être considérées comme telles.

La source de lumière 11 est apte à produire une pluralité d'ondes lumineuses incidentes $12_1.....12_n$, chaque $i^{ème}$ onde lumineuse $12_i$ s'étendant selon une $i^{ème}$ bande spectrale $\lambda_i$. Les bandes spectrales $12_1...12_n$ sont différentes les unes des autres, et, de préférence, ne se recouvrent pas.

Dans l'exemple de dispositif représenté sur les figures 1 et 2, la source de lumière comporte trois sources de lumières élémentaires de type diodes électroluminescentes (LED, acronyme du terme anglais Light Emitting Diode), $11_1$, $11_2$ et $11_3$ émettant respectivement dans les bandes spectrales $\lambda_1$ = 450nm - 465 nm ; $\lambda_2$ = 520nm - 535 nm ; $\lambda_3$ = 620 nm - 630 nm. De préférence, il n'y a pas de recouvrement entre les différentes bandes spectrales ; un recouvrement négligeable, par exemple concernant moins de 25%, mieux moins de 10% de l'intensité lumineuse émise, est toutefois envisageable. Dans ces exemple, la source de lumière 11 comporte une diode LED multiple de marque Cree (marque déposée) et de référence XLamp (marque déposée) MC-E. Cette diode comporte quatre diodes électroluminescentes élémentaires adressables individuellement, dont trois seulement sont mises en œuvre dans le cadre de cette invention, la quatrième étant une LED blanche. Les sources de lumière élémentaires peuvent être des sources temporellement cohérentes, comme des diodes Laser. D'autres configurations de sources lumineuses 11 sont possibles et décrites par la suite.

La source de lumière 11 est de préférence ponctuelle. Elle peut notamment comprendre un diaphragme 18, ou filtre spatial. L'ouverture du diaphragme est typiquement comprise entre 5 $\mu$m et 1mm, de préférence entre 50 $\mu$m et 500 $\mu$m, par exemple 150 $\mu$m. Le diaphragme peut être remplacé par une fibre optique, dont une première extrémité est placée face à une source de lumière élémentaire $11_1$, $11_2$ ou $11_3$, et dont une deuxième extrémité est placée face à l'échantillon.

La source de lumière 11 comporte de préférence un diffuseur 17, disposé entre chaque source de lumière élémentaire $11_1$, $11_2$ et $11_3$ et le diaphragme 18. Les inventeurs ont constaté que l'usage d'un tel diffuseur permet de s'affranchir de contraintes de centrage de chaque source élémentaire par rapport à l'ouverture du diaphragme. Autrement dit, l'utilisation d'un tel diffuseur permet d'utiliser une source de lumière élémentaire $11_i$, avec $1 \leq i \leq 3$, légèrement décentrée par rapport à l'ouverture du diaphragme 18. Dans cet exemple, le diaphragme est fourni par Thorlabs sous la référence P150S.

De préférence, chaque source de lumière élémentaire $11_i$ est de faible largeur spectrale, par exemple inférieure à 100 nm, voire 20 nm. Le terme largeur spectrale désigne la largeur à mi-hauteur de la bande d'émission de la source de lumière considérée.

Dans cet exemple, le diffuseur mis en œuvre est un diffuseur 40° (Référence Light Shaping Diffuser 40°, fabriqué par Luminit). La fonction d'un tel diffuseur est de répartir le faisceau lumineux, produit par une source de lumière élémentaire $11_i$, selon un cône d'angle a, a étant égal à 40° dans le cas présent. De préférence, l'angle de diffusion $\alpha$ varie entre 10° et 60°.

L'échantillon 10 est disposé entre la source de lumière 11 et un photodétecteur matriciel 16. Ce dernier s'étend de préférence parallèlement, ou sensiblement parallèlement à la lame transparente 15 supportant l'échantillon.

Le terme sensiblement parallèlement signifie que les deux éléments peuvent ne pas être rigoureusement parallèles, une tolérance angulaire de quelques degrés, inférieure à 10° étant admise.

Le photodétecteur 16 est un imageur, apte à former une image selon un plan de détection P. Dans l'exemple représenté, il s'agit d'un photodétecteur matriciel comportant une matrice de pixels, de type CCD ou un CMOS. Les CMOS sont les photodétecteurs préférés, car la taille des pixels est plus faible, ce qui permet d'acquérir des images dont la résolution spatiale est plus favorable. Dans cet exemple, le détecteur est un capteur CMOS commercialisé par Omnivision sous la référence OV5647. Il s'agit d'un capteur CMOS RGB, comprenant 2592 x 1944 pixels, avec un pas inter-pixels de 1.4 $\mu$m. La surface utile du photodétecteur est de 3.6 x 2.7 mm$^2$. Le plan de détection P s'étend de préférence perpendiculairement à l'axe de propagation Z de l'onde lumineuse incidente 12.

De préférence, le photodétecteur comprend une matrice de pixels, au-dessus de laquelle est disposée une fenêtre de protection transparente. La distance entre la matrice de pixels et la fenêtre de protection est généralement comprise entre quelques dizaines de $\mu$m à 150 ou 200 $\mu$m. Les photodétecteurs dont le pas inter pixel est inférieur à 3 $\mu$m sont préférés, afin d'améliorer la résolution spatiale de l'image. Le photodétecteur peut comprendre un système de renvoi d'image de type miroir vers une matrice de pixels, auquel cas le plan de détection correspond au plan selon lequel s'étend le système de renvoi d'image. D'une façon générale, le plan de détection P correspond au plan dans lequel une image est formée.

La distance d entre l'échantillon 10 et la matrice de pixels du photodétecteur 16 est, dans cet exemple, égale à 300 $\mu$m. D'une manière générale, et cela quel que soit le mode de réalisation, la distance d entre l'échantillon et les pixels du photodétecteur est préférentiellement comprise entre 50 $\mu$m et 2 cm, de préférence comprise entre 100 $\mu$m et 2 mm.

On remarque l'absence d'optique de grossissement entre le photodétecteur 16 et l'échantillon 10. Cela n'empêche pas la présence éventuelle de microlentilles de focalisation au niveau de chaque pixel du photodétecteur 16, ces dernières n'ayant pas de fonction de grandissement de l'image.

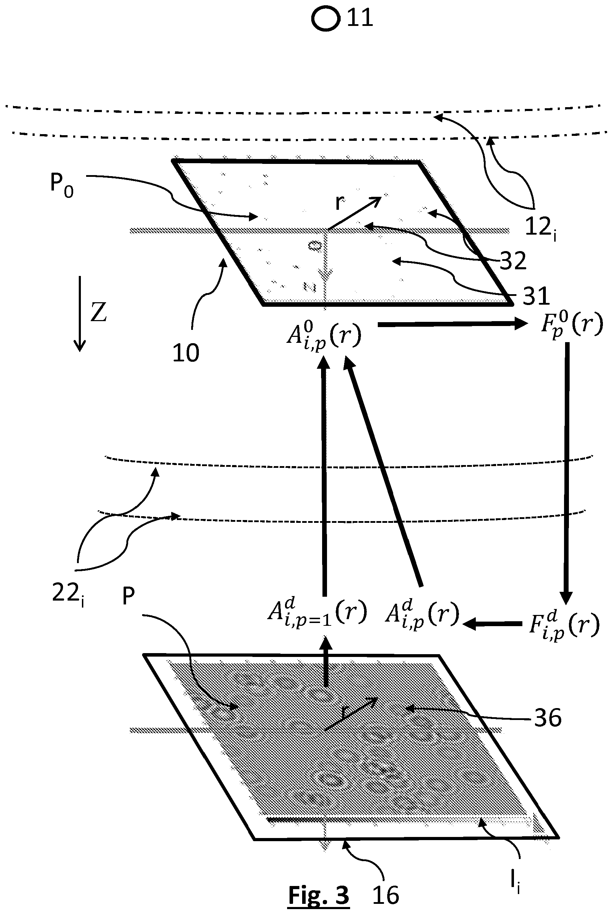

La figure 3 représente un échantillon 10, comportant des objets diffractants 32 disposés autour de zones non diffractantes ou peu diffractantes 31, qualifiées par la suite de zones pauvres. L'échantillon peut être solide, par exemple dans le cas d'un tissu déposé sur une lame d'anatomopathologie. Il peut également être liquide, par exemple dans le cas d'un liquide corporel ou d'un milieu de culture cellulaire.

Le photodétecteur 16 est apte à réaliser une image $I_i$ d'une onde lumineuse $22_i$ transmise par l'échantillon 10 lorsque ce dernier est éclairé par une onde incidente $12_i$, dans la $i^{ème}$ bande spectrale $\lambda_i$. La bande spectrale de l'onde lumineuse transmise $22_i$ comporte tout ou partie de la bande spectrale de l'onde incidente $12_i$. L'onde lumineuse $22_i$, transmise par l'échantillon dans la bande spectrale $\lambda_i$, résulte de l'interaction de l'échantillon 10 avec l'onde lumineuse incidente $12_i$, produite par la source de lumière élémentaire $11_i$.

Sous l'effet de l'onde lumineuse incidente $12_i$, l'échantillon 10 engendre une onde diffractée, susceptible de produire, au niveau du plan de détection P, des interférences, en particulier avec une partie de l'onde lumineuse incidente $12_i$ transmise par l'échantillon. Ces interférences donnent lieu, sur l'image acquise par le photodétecteur, à une pluralité de figures de diffraction élémentaires, chaque figure de diffraction élémentaire 36 comportant une zone centrale et plusieurs anneaux de diffraction concentriques. Chaque figure de diffraction élémentaire 36 est due à un objet diffractant 32 dans l'échantillon.

Par ailleurs, l'échantillon peut absorber une partie de l'onde lumineuse incidente $12_i$. Ainsi, l'onde lumineuse $22_i$, dans une bande spectrale $\lambda_i$, transmise par l'échantillon, et à laquelle est exposé le photodétecteur matriciel 16, peut comprendre :

- une composante résultant de la diffraction, précédemment décrite, cette composante de diffraction pouvant notamment se traduire par la présence de figures de diffraction élémentaires sur le photodétecteur 16, chaque figure de diffraction élémentaire pouvant être associée à un élément diffractant 32 de l'échantillon. Un tel élément diffractant peut être une cellule, ou une particule ou tout autre objet diffractant 32 présent dans l'échantillon 10.
- une composante résultant de l'absorption de l'onde lumineuse incidente $12_i$ dans l'échantillon.

Un processeur 20, par exemple un microprocesseur, est apte à traiter chaque image générée par le photodétecteur matriciel 16. En particulier, le processeur est un microprocesseur relié à une mémoire programmable 23 dans laquelle est stockée une séquence d'instructions pour effectuer les opérations de traitement d'images et de calculs décrites dans cette description. Il peut également être relié à un écran d'affichage 24.

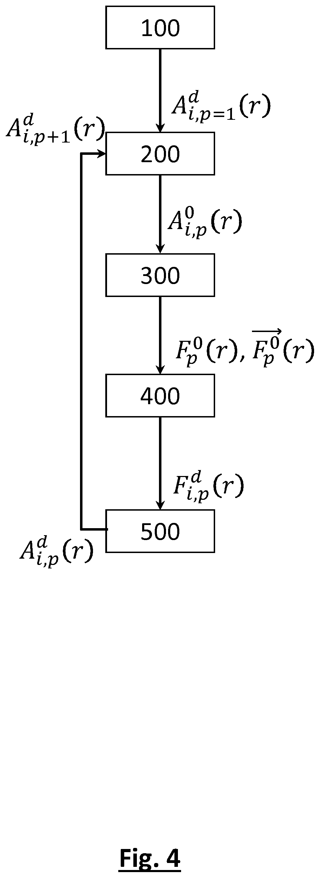

On décrit ci-après les étapes d'un procédé itératif d'obtention d'une image de l'échantillon 10, en lien avec les figures 3 et 4.

1$^{ère}$ étape : initialisation

Lors d'une première étape 100 d'acquisition d'images, chaque source de lumière élémentaire $11_i$ de la source de lumière 11 est successivement activée, chaque source de lumière produisant une onde lumineuse incidente ($12_1$, .. $12_N$), dans une bande spectrale ($\lambda_1,...\lambda_N$), selon un axe de propagation Z, en direction de l'échantillon 10.

A chaque acquisition, le photodétecteur matriciel recueille une image $I_i$ correspondant à une bande spectrale $\lambda_i$, l'indice i, relatif à la bande spectrale, étant compris entre 1 et N, N étant le nombre de bandes spectrales considérées. Dans l'exemple représenté sur les figures 1 et 2, la source de lumière 11 comporte trois sources de lumière élémentaires

$11_1$, $11_2$ et $11_3$. Le photodétecteur recueille trois images $I_1$, $I_2$, $I_3$, correspondant respectivement aux bandes spectrales $\lambda_1$, $\lambda_2$ et $\lambda_3$.

L'échantillon est placé à une coordonnée axiale z = 0, selon l'axe de propagation Z. On désigne par r une coordonnée radiale, c'est-à-dire une coordonnée dans un plan perpendiculaire à l'axe de propagation Z. Le plan z = d correspond au plan de détection, tandis que le plan z = 0 correspond à un plan passant par l'échantillon, dit plan de l'échantillon et noté $P_0$.

Si $I_i^{z=d}(r) = I_i^d(r)$ désigne la valeur de l'intensité collectée, dans la bande spectrale $\lambda_i$, par le pixel du détecteur de coordonnée radiale r dans le plan de détection, il est possible d'établir, à l'aide de l'image $I_i$, une amplitude complexe $\alpha_i^{z=d}(r) = \alpha_i^d(r)$ de l'onde $22_i$ au niveau dudit pixel de coordonnée r, dont le module peut être exprimé selon l'expression :

$$\left| \alpha_i^d(r) \right| = \sqrt{I_i^d(r)}$$

L'exposant d exprime le fait que l'amplitude complexe est déterminée selon le plan P de l'échantillon, d'équation z = d. L'amplitude complexe $\alpha_i^d(r)$ comporte un module et un argument, de telle sorte que :

$$\alpha_i^d(r) = M_i^d(r) e^{j\varphi_i^d(r)}$$

où :

- $M_i^d(r)$ désigne le module de l'amplitude complexe de l'onde lumineuse détectée par le photodétecteur, dans la $i^{ème}$ bande spectrale $\lambda_i$, à une coordonnée radiale r dans le plan de détection ;

- $\varphi_i^d(r)$ désigne la phase de l'amplitude complexe de l'onde lumineuse détectée par le photodétecteur, dans la $i^{ème}$ bande spectrale $\lambda_i$ et à ladite coordonnée radiale r dans plan de détection.

Or, le photodétecteur matriciel ne fournit aucune information relative à la phase de l'onde lumineuse. Aussi, lors de l'étape 100, on considère que $e^{j\varphi_i^d(r)}$ est égal à une valeur initiale arbitraire, par exemple égale à 1.

L'amplitude complexe $\alpha_i^d(r)$ peut être exprimée de façon normalisée, selon l'expression :

$$A_i^d(r) = \frac{\alpha_i^d(r)}{\sqrt{I_i^{mean}}}$$

où :

- $I_i^{mean}$ désigne l'intensité moyenne l'onde lumineuse $12_i$ émise par la source de lumière 11 dans la $i^{ème}$ bande spectrale $\lambda_i$; cette intensité moyenne peut être déterminée expérimentalement, en disposant le photodétecteur 16 face à la source de lumière 11, sans échantillon interposé entre l'un et l'autre, et en calculant la moyenne des pixels de l'image acquise par le photodétecteur 16.

- $A_i^d(r)$ désigne l'amplitude complexe normalisée de l'onde lumineuse $22_i$, détectée par le photodétecteur matriciel 16 dans la $i^{ème}$ bande spectrale $\lambda_i$.

La normalisation peut également être réalisée en divisant l'amplitude complexe $\alpha_i^d(r)$ par $I_i^{mean}(r)$, ce terme représentant l'intensité lumineuse, à la coordonnée radiale r, mesurée en l'absence d'échantillon.

L'amplitude complexe normalisée $A_i^d(r)$ comporte un module et un argument, de telle sorte que :

$$A_i^d(r) = m_i^d(r)e^{j\varphi_i^d(r)}$$

où :

- $m_i^d(r)$ désigne le module de l'amplitude complexe normalisée $A_i^d(r)$ ;
- $\varphi_i^d(r)$ désigne la phase de l'amplitude complexe normalisée, qui est également la phase de l'amplitude complexe $\alpha_i^d(r)$.

La première étape 100 permet d'attribuer à chaque amplitude complexe $\alpha_i^d(r)$ ou à chaque amplitude complexe normalisée $A_i^d(r)$ une valeur initiale à partir de l'image $I_i$ détectée par le photodétecteur dans la $i^{ème}$ bande spectrale $\lambda_i$, de telle sorte que :

$$\alpha_{i,p=1}^d(r) = M_i^d(r) = \sqrt{I_i^d(r)}$$

ou

$$A_{i,p=1}^d(r) = m_i^d(r) = \sqrt{\frac{I_i^d(r)}{I_i^{mean}}}$$

L'indice $p$ correspond au rang de l'itération du procédé itératif décrit par la suite. L'étape 100 étant une étape d'initialisation, on attribue la valeur 1 à cet indice.

En adressant tout ou partie des pixels $r$ du photodétecteur 16, on obtient une image complexe, ou champ complexe, de l'onde lumineuse $22_i$, au niveau du plan du détecteur, cette image rassemblant les amplitudes complexes $\alpha_i^d(r)$ ou les amplitudes complexes normalisées $A_i^d(r)$. Dans la suite de la description, on ne considère que l'amplitude complexe normalisée $A_i^d(r)$, sachant que le raisonnement s'applique également à l'amplitude complexe $\alpha_i^d(r)$.

Cette première étape est répétée pour chaque bande spectrale $(\lambda_1...\lambda_N)$ détectée par le photodétecteur.

2^{ème} étape : rétropropagation dans le plan $P_0$ de l'échantillon

Durant une deuxième étape 200, on estime l'amplitude complexe normalisée $A_{i,p}^0(r)$ de l'onde $22_i$, à laquelle est exposé le détecteur, dans le plan de l'échantillon $P_0$. Cette estimation est réalisée par rétropropagation de l'amplitude complexe normalisée $A_{i,p}^d(r)$, déterminée dans le plan de détection P, du plan de détection P vers le plan de l'échantillon $P_0$.

L'indice $p$ désigne le rang de l'itération. Lors de la première itération ($p$ = 1), on utilise l'amplitude complexe normalisée initiale $A_{i,p=1}^d(r) = A_i^d(r)$ obtenue suite à la première étape 100. Lors des itérations suivantes ($p$ > 1), on utilise l'amplitude complexe résultant de l'itération précédente, comme cela sera détaillé par la suite.

Selon les principes bien connus de la reconstruction holographique numérique, en effectuant un produit de convolution entre l'amplitude complexe de l'onde lumineuse $22_i$, relative à la bande spectrale $\lambda_i$, déterminée dans le plan de détection z = d, et un opérateur de propagation h(r,z), il est possible de reconstruire une amplitude complexe de cette même onde lumineuse en tout point de coordonnées ($r$,z) de l'espace, et en particulier dans le plan $P_0$ de l'échantillon.

Autrement dit, l'amplitude complexe normalisée $A_{i,p}^z(r)$ de l'onde lumineuse 22$_i$, peut s'obtenir, à un point de coordonnées (r,z), à partir de $A_{i,p}^{z=d}(r)$ , selon l'opération :

$$A_{i,p}^z(r) = A_{i,p}^{z=d}(r) * h_{\lambda i}(r, z - d),$$

Où h$_{\lambda i}$ désigne l'opérateur de propagation dans la bande spectrale $\lambda_i$.

Lorsque la reconstruction s'effectue selon le sens la propagation de la lumière, par exemple de l'échantillon vers le photodétecteur, on parle de propagation. Lorsque la reconstruction s'effectue selon le sens inverse de la propagation de la lumière, par exemple du photodétecteur vers l'échantillon, on parle de rétropropagation.

L'opérateur de propagation peut notamment reposer sur le modèle de diffraction de Fresnel. Dans cet exemple, l'opérateur de propagation est la fonction de Fresnel-Helmholtz, telle que :

$$h(r,z) = \frac{1}{j\lambda z} e^{j2\pi\frac{z}{\lambda}} \exp(j\pi\frac{r^2}{\lambda z}).$$

où $\lambda$ désigne la longueur d'onde.

Ainsi,

$$A_{i,p}^{z=0}(r) = A_{i,p}^0(r) = A_{i,p}^{z=d}(r) * h_{\lambda i}(r, -d)$$
$$= -\frac{1}{j\lambda_i d} e^{-j2\pi\frac{d}{\lambda_i}} \iint A_{i,p}^d(r') \exp -(j\pi\frac{(r-r')^2}{\lambda_i d}) dr'$$

où

- $r'$ désigne les coordonnées radiales dans le plan du photodétecteur (z = d),
- $r$ désigne les coordonnées radiales dans le plan de reconstruction (z = 0),
- $\lambda_i$ désigne la longueur d'onde centrale de la bande spectrale considérée.

$A_{i,p}^0(r)$ est donc obtenu par rétropropagation de $A_{i,p}^d(r)$ selon la distance d séparant le plan de détection P du plan de l'échantillon P$_0$.

Cette deuxième étape est répétée pour chaque bande spectrale ($\lambda_1...\lambda_N$) émise par la source de lumière 11 ou, de façon plus générale, pour chaque bande spectrale ($\lambda_1...\lambda_N$) respectivement associée à chaque image (I$_1$...I$_N$) détectée par le photodétecteur 16.

Il est possible, à ce stade, d'établir une image du module ou de la phase de l'amplitude $A_{i,p}^0(r)$ complexe de chaque onde lumineuse 22$_i$, dans le plan de l'échantillon P$_0$, l'amplitude complexe étant normalisée ou non, en calculant la valeur de $A_{i,p}^0(r)$ aux différentes coordonnées r dans le plan de l'échantillon.

Chaque image du module de l'amplitude complexe $A_{i,p}^0(r)$ est représentative de l'intensité de l'onde lumineuse au niveau de l'échantillon, tandis que chaque image de l'argument de l'amplitude complexe $A_{i,p}^0(r)$ est représentative de la phase de l'intensité de l'onde lumineuse au niveau de l'échantillon.

Lorsque, comme dans le cas présent, on met en oeuvre trois bandes spectrales centrées respectivement sur des longueurs d'onde dans le bleu, le vert et le rouge, l'information contenue dans les trois images permet d'obtenir une image en couleur de l'échantillon.

On note que l'amplitude complexe normalisée $A_{i,p}^0(r)$ est équivalente à une fonction de transmission de l'onde incidente 12$_i$ par l'échantillon 10 à la coordonnée radiale r.

3$^{ième}$ étape : détermination de la fonction de pondération

Au cours de l'étape 300, on constitue, dans le plan de l'échantillon, une fonction de pondération, notée $F_p^0(r)$, de l'amplitude complexe de l'onde lumineuse transmise par l'échantillon dans les différentes bandes spectrales $\lambda_i$ considérées.

Selon cet exemple, la fonction de pondération $F_p^0(r)$, dans le plan de l'échantillon, peut être commune à chaque bande spectrale. Elle est obtenue en combinant les amplitudes complexes normalisées $A_{i,p}^0(r)$ de l'onde lumineuse transmise par l'échantillon, dans le plan $P_0$ de l'échantillon et dans les différentes bandes spectrales $\lambda_i$

Selon un exemple, la fonction de pondération est obtenue par une somme pondérée de chaque amplitude complexe déterminée lors de l'étape 200, dans le plan $P_0$ de l'échantillon, selon l'expression :

$$F_p^0(r) = \frac{1}{\sum_i k_i} \sum_i k_i A_{i,p}^0(r)$$

où $k_i$ désigne un facteur de pondération, positif, associé à la i$^{ème}$ bande spectrale $\lambda_i$.

Les facteurs de pondération peuvent être égaux les uns aux autres, par exemple égaux à 1/3. D'autres façons de déterminer la fonction de pondération, dans le plan de l'échantillon, sont détaillées par la suite.

4$^{ième}$ étape : propagation de la fonction de pondération dans le plan du détecteur

L'étape 400 vise à propager, du plan de l'échantillon $P_0$ vers le plan du détecteur P, la fonction de pondération $F_p^0(r)$ déterminée, lors de l'étape précédente, dans le plan de l'échantillon $P_0$. L'opérateur de propagation étant dépendant de la longueur d'onde, cette propagation est effectuée pour chaque bande spectrale $\lambda_i$ considérée.

Ainsi, pour chaque bande spectrale $\lambda_i$, $F_{i,p}^d(r) = F_p^0(r) * h_{\lambda i}(r, z = d)$.

Lorsque l'opérateur de propagation est un opérateur de Fresnel-Helmholtz tel que précédemment défini,

$$F_{i,p}^d(r) = \frac{1}{j\lambda_i d} e^{j2\pi \frac{d}{\lambda_i}} \iint F_{i,p}^0(r') \exp(j\pi \frac{(r-r')^2}{\lambda_i d}) dr'$$

L'opérateur de propagation dépendant de la longueur d'onde, on détermine autant de fonctions de pondération, dans le plan de détection, que de bandes spectrales considérées.

- r' désigne les coordonnées radiales dans le plan de l'échantillon (z = 0),
- r désigne les coordonnées radiales dans le plan de reconstruction, c'est-à-dire le plan du détecteur (*z = d*),
- $\lambda_i$ désigne la longueur d'onde centrale de la bande spectrale considérée.

5$^{ième}$ étape : mise à jour de l'amplitude complexe dans le plan du détecteur

Dans l'étape 500, on utilise la valeur de la fonction de pondération, dans le plan de détection z = d, pour mettre à jour l'estimation de l'amplitude complexe normalisée $A_{i,p}^d(r)$ de l'onde lumineuse 22$_i$, à laquelle est exposé le photodétecteur 16, dans la bande spectrale $\lambda_i$.

La formule de mise à jour est :

$$A_{i,p}^d(r) = m_i^d(r) \times \frac{F_{i,p}^d(r)}{\left| F_{i,p}^d(r) \right|} = m_i^d(r) \times e^{j\tilde{\varphi}_{i,p}^d(r)}$$

où :

- $\left|F_{i,p}^{d}(r)\right|$ désigne le module de $F_{i,p}^{d}(r)$ ;

- $m_{i}^{d}(r)$ désigne le module de l'amplitude complexe initiale normalisée $A_{i,p=1}^{d}$ déterminé, à partir de l'image I$_i$, lors de la première étape 100. Ce terme a une fonction d'attache aux données mesurées ;

- $\tilde{\varphi}_{i,p}^{d}$ désigne une estimation de la phase de l'amplitude complexe de l'onde 22$_i$, dans la i$^{ème}$ bande spectrale $\lambda_i$ ;

- $A_{i,p}^{d}(r)$ désigne l'amplitude complexe de l'onde lumineuse 22i transmise par l'échantillon, dans le plan du photodétecteur 16, cette amplitude complexe constituant la base de l'itération suivante.

A la suite de cette étape, une nouvelle itération peut commencer, la donnée d'entrée de cette nouvelle itération $p + 1$ étant $A_{i,p+1}^{d}(r) = A_{i,p}^{d}(r)$, cette nouvelle itération débutant par la rétropropagation de chaque amplitude complexe normalisée $A_{i,p+1}^{d}(r)$, pour les différentes bandes spectrales considérées, dans le plan P$_0$ de l'échantillon, selon l'étape 200.

Les étapes 200 à 500 sont réalisées de manière itérative, soit selon un nombre d'itérations $p_{\max}$ prédéterminé, soit jusqu'à l'atteinte d'un critère de convergence, ce dernier pouvant être, par exemple, exprimé sous la forme d'un écart entre l'estimation de deux mêmes grandeurs entre deux itérations successives. Lorsque cet écart est inférieur à un seuil $\varepsilon$ donné, le critère de convergence est atteint. Par exemple, le processus est arrêté lorsque l'une de ces conditions est atteinte :

- 
$$\left|\frac{F_{i,p}^{d}(r)}{\left|F_{i,p}^{d}(r)\right|} - \frac{F_{i,p+1}^{d}(r)}{\left|F_{i,p+1}^{d}(r)\right|}\right| < \varepsilon ;$$

- 
$$\left|F_{i,p}^{0}(r) - F_{i,p+1}^{0}(r)\right| < \varepsilon ;$$

- 
$$\left|A_{i,p}^{0}(r) - A_{i,p+1}^{0}(r)\right| < \varepsilon ;$$

- 
$$Arg\left(A_{i,p}^{0}(r) - A_{i,p+1}^{0}(r)\right) < \varepsilon ;$$

Cette liste n'est pas limitative.

A l'issue du procédé, on dispose d'une estimation de l'amplitude complexe de l'onde lumineuse 22$_i$, transmise par l'échantillon, et à laquelle est exposé le photodétecteur, dans le plan du détecteur P, d'équation $z = d$ et/ou dans le plan de l'échantillon P$_0$, d'équation $z = 0$, et cela pour chaque bande spectrale considérée. En utilisant les différentes amplitudes complexes reconstruites $A_{i,p}^{0}(r)$ dans le plan de l'échantillon, on obtient une représentation précise de ce dernier, dans chacune des bandes spectrales considérées, en particulier en formant des images à partir du module ou de la phase desdites amplitudes complexes.

Comme précédemment évoqué, lorsque les bandes spectrales sont distribuées dans le spectre visible, les images du module ou de la phase peuvent être combinées, par exemple superposées de façon à obtenir des représentations en couleur.

Il est rappelé que cet algorithme, bien que décrit en relation avec une amplitude complexe normalisée $A_i$, s'applique également à l'amplitude complexe non normalisée $\alpha_i$.

Apport de la fonction de pondération

Un des points importants de cet algorithme itératif est la constitution de la fonction de pondération F$^0$(r) dans le plan de l'échantillon. En effet, d'une façon générale, la détermination de l'amplitude complexe d'une onde lumineuse à partir d'une image acquise par un photodétecteur est insuffisante, car l'information quant à la phase de l'onde n'est pas enregistrée par le photodétecteur, ce dernier n'étant sensible qu'à l'intensité, correspondant au module de l'amplitude complexe de l'onde.

Ainsi, comme indiqué lors de la description de l'étape 100, l'amplitude complexe $\alpha_i^d(r)$ ou l'amplitude complexe normalisée $A_i^d(r)$ déterminées au cours de cette étape ne comportent pas d'information quant à la phase de l'onde lumineuse qu'elles représentent. Ce manque d'information se traduit, lors de la rétropropagation du plan du détecteur P vers le plan de l'échantillon $P_0$, faisant l'objet de l'étape 200, par la formation d'artéfacts désignés par le terme « twin image ».

Les inventeurs ont constaté que ces artéfacts affectent principalement les zones pauvres 31 disposées au voisinage d'éléments diffractants 32, c'est-à-dire les zones situées entre deux éléments diffractants adjacents 32. En outre, ils ont constaté que ces artéfacts sont susceptibles de fluctuer en fonction de la longueur d'onde. Ainsi, en combinant les amplitudes complexes dans différentes longueurs d'onde, rétropropagées dans le plan de l'échantillon, les artéfacts, au niveau des zones pauvres 31, se moyennent statistiquement. Ce lissage statistique augmente alors le rapport signal sur bruit de l'image complexe rétropropagée dans le plan de l'échantillon. D'une façon générale, le procédé revient à :

- obtenir une estimation initiale $A_{i,p=1}^d(r)$ de l'amplitude complexe de l'onde $22_i$ transmise par l'échantillon, dans le plan du détecteur, et cela dans plusieurs bandes spectrales (étape 100) ;
- rétropropager chacune de ces amplitudes complexes dans le plan de l'échantillon, pour obtenir, à chaque bande spectrale, une amplitude complexe dans le plan de l'échantillon $A_{i,p}^0(r)$ (étape 200)
- constituer une fonction de pondération de chaque amplitude complexe $F_p^0(r)$ dans le plan de l'échantillon (étape 300), de manière à réduire l'influence des artéfacts de twin image ;
- propager ladite fonction de pondération dans le plan du détecteur, pour chaque bande spectrale, (étape 400) ;
- mettre à jour l'estimation de l'amplitude complexe $A_{i,p}^d(r)$ de l'onde $22_i$ transmise par l'échantillon, dans le plan du détecteur, et cela dans plusieurs bandes spectrales, à l'aide de la fonction de pondération $F_{i,p}^d(r)$ propagée dans le plan du détecteur (étape 500).

La formule de mise à jour de l'étape 500 montre qu'à chaque itération, le module $m_i^d(r)$ (respectivement $M_i^d(r)$) de l'amplitude complexe normalisée $A_{i,p}^d(r)$ (respectivement de l'amplitude complexe $\alpha_{i,p}^d(r)$), dans le plan de détection, correspond à celui déterminé, au cours de l'étape 100, par chaque image $I_i$ formée par le photodétecteur 16 dans la bande spectrale $\lambda_i$. Autrement dit, au cours des différentes itérations, le module, dans le plan de détection, de l'amplitude complexe $\alpha_{i,}^d(r)$ ou de l'amplitude complexe normalisée $A_{i,p}^d(r)$ n'évolue pas et correspond à celui dérivé de l'intensité mesurée par le photodétecteur.

En revanche, l'algorithme tend à faire évoluer, à chaque mise à jour, l'argument des expressions complexe $A_{i,p}^d(r)$ ou $\alpha_{i,p}^d(r)$, et en particulier l'estimation de la phase $\tilde{\varphi}_{i,p}^d(r)$, cette dernière étant considérée comme égale à la phase de la fonction de pondération $F_{i,p}^d(r)$ propagée dans le plan du détecteur, à chaque longueur d'onde $\lambda_i$.

Aussi, selon cet algorithme, chaque itération comprend :

- une mise à jour de l'amplitude complexe $A_{i,p}^0(r)$ de chaque onde lumineuse dans le plan de l'échantillon $P_0$ (étape 200) ;
- une mise à jour de l'argument de chaque amplitude complexe, $A_{i,p}^d(r)$ et en particulier de sa phase, dans le plan de détection (étape 500).

Elaboration de la fonction de pondération.

Une première façon de constituer la fonction de pondération est d'effectuer une pondération équitable entre les différentes bandes spectrales $\lambda_i$ considérées.

Par exemple, la fonction de pondération peut prendre la forme $F_p^0(r) = \frac{1}{\sum_i k_i} \sum_i k_i A_{i,p}^0(r)$ , ou $k_{ii}$ désigne le facteur de pondération, ou poids, attribué à la $i^{ème}$ bande spectrale $\lambda_i$, comme précédemment décrit en liaison avec l'étape 300. Chaque facteur de pondération $k_i$ est positif et peut avoir la même valeur, par exemple 1/3.

Selon une variante, et cela s'applique notamment dans le cas où l'échantillon analysé est coloré, selon une plage spectrale $\lambda_0$, les modules des amplitudes complexes de premières ondes lumineuses $22_i$, dont les bandes spectrales $\lambda_i$ sont proches de la plage spectrale $\lambda_0$ ont une valeur plus élevée que les modules des amplitudes complexes de deuxièmes ondes lumineuses dont les bandes spectrales sont plus éloignées de la longueur d'onde $\lambda_0$. Dans un tel cas de figure, il est préférable de sous-pondérer les amplitudes complexes des premières ondes lumineuses, et de surpondérer les amplitudes complexes des deuxièmes ondes lumineuses.

Par exemple, si l'échantillon est coloré à l'aide d'un colorant bleu, qui correspond dans notre exemple à la première bande spectrale $\lambda_1$, le facteur de pondération $k_1$ est plus faible que les facteurs de pondération $k_2$ et $k_3$ respectivement associés aux bandes spectrales $\lambda_2$ (verte) et $\lambda_3$ (rouge).

Selon une autre variante, le module et l'argument de chaque amplitude complexe sont pondérés par des facteurs de pondérations indépendants, de telle sorte que

$$\left| F_p^0(r) \right| = \frac{1}{\sum_i k_i} \sum_i k_i \left| A_{i,p}^0(r) \right|$$

$$Arg\left(F_p^0(r)\right) = \frac{1}{\sum_i k'_i} \sum_i k'_i\, Arg\left(A_{i,p}^0(r)\right)$$

$k_i$ et $k'_i$ étant des facteurs de pondération respectivement associés au module et à l'argument de l'amplitude complexe de l'onde lumineuse $22_i$, dans le plan de l'échantillon, dans la bande spectrale $\lambda_i$.

Selon une autre variante, la combinaison des amplitudes complexes $A_{i,p}^0(r)$ prend la forme d'une somme de logarithmes, selon l'expression : $\ln(F_p^0(r)) = \frac{1}{\sum_i k_i} \sum_i k_i \ln\left[ A_{i,p}^0(r) \right]$ .

Selon une autre variante, on détermine, dans le plan de l'échantillon, non pas une fonction de pondération $F_p^0(r)$ , mais une pluralité de fonctions de pondération $F_{i,p}^0(r)$ , chaque fonction étant associée à une bande spectrale $\lambda_i$.

Chaque fonction de pondération $F_{i,p}^0(r)$ , associée à une $i^{ème}$ longueur d'onde, est obtenue en combinant plusieurs amplitudes complexes $A_{i,p}^0(r)$ , respectivement associées à différentes bandes spectrales.

Selon un premier exemple, en considérant trois bandes spectrales :

$$\begin{bmatrix} F_{1,p}^0 \\ F_{2,p}^0 \\ F_{3,p}^0 \end{bmatrix} = \begin{bmatrix} k_{1,1} & k_{1,2} & k_{1,3} \\ k_{2,1} & k_{2,2} & k_{2,3} \\ k_{3,1} & k_{3,2} & k_{3,3} \end{bmatrix} \begin{bmatrix} A_{1,p}^0(r) \\ A_{2,p}^0(r) \\ A_{3,p}^0(r) \end{bmatrix}$$

Ainsi, selon ce mode de réalisation, la fonction de pondération prend la forme d'un vecteur $\overrightarrow{F_p^0}(r)$ , de dimension N, N étant le nombre de bandes spectrales considérées, dont chaque terme $F_{i,p}^0(r)$ est une fonction de pondération associée à une bande spectrale $\lambda_i$. Cette fonction de pondération peut être obtenue par le produit matriciel suivant :

$$\overrightarrow{F_p^0}(r) = \boldsymbol{K}\, \overrightarrow{A_p^0}$$

Où $\boldsymbol{K}$ est une matrice de pondération, chaque terme $k_{i,j}$ de la matrice de pondération représentant le poids associé à l'amplitude complexe $A_{j,p}^0(r)$ associée à la bande spectrale $\lambda_j$ pour le calcul de la fonction de pondération associée à la bande spectrale $\lambda_i$.

La matrice $K$ est une matrice carrée de dimension N x N, N étant le nombre de bandes spectrales considérées.

La fonction de pondération est de préférence normalisée, de telle sorte que chaque terme $F_{i,p}^0$ s'exprime sous la forme :

$$F_{i,p}^0(r) = \frac{1}{\sum_j k_{i,j}} \sum_j k_{i,j}\, A_j^0(r)$$

le terme $\dfrac{1}{\sum_j k_{i,j}}$ étant un terme de normalisation.

Selon un deuxième exemple de ce mode de réalisation, toujours en considérant trois bandes spectrales,

$$
\begin{bmatrix}
|F_{1,p}^0(r)| \\
|F_{2,p}^0(r)| \\
|F_{3,p}^0(r)| \\
\arg(F_{1,p}^0(r)) \\
\arg(F_{2,p}^0(r)) \\
\arg(F_{3,p}^0(r))
\end{bmatrix}
=
\begin{bmatrix}
k_{1,1} & k_{1,2} & k_{1,3} & k_{1,4} & k_{1,5} & k_{1,6} \\
k_{2,1} & k_{2,2} & k_{2,3} & k_{2,4} & k_{2,5} & k_{2,6} \\
k_{3,1} & k_{3,2} & k_{3,3} & k_{3,4} & k_{3,5} & k_{3,6} \\
k_{4,1} & k_{4,2} & k_{4,3} & k_{4,4} & k_{4,5} & k_{4,6} \\
k_{5,1} & k_{5,2} & k_{5,3} & k_{5,4} & k_{5,5} & k_{5,6} \\
k_{6,1} & k_{6,2} & k_{6,3} & k_{6,4} & k_{6,5} & k_{6,6}
\end{bmatrix}
\begin{bmatrix}
|A_{1,p}^0(r)| \\
|A_{2,p}^0(r)| \\
|A_{3,p}^0(r)| \\
\arg(A_{1,p}^0(r)) \\
\arg(A_{2,p}^0(r)) \\
\arg(A_{3,p}^0(r))
\end{bmatrix}
$$

Ainsi, selon ce mode de réalisation, la fonction de pondération prend la forme d'un vecteur $\overrightarrow{F_p^0}(r)$, de dimension 2N, N étant le nombre de bandes spectrales considérées, dont chaque terme représente soit le module soit l'argument d'une fonction de pondération $F_{i,p}^0(r)$ associée à une bande spectrale $\lambda_i$. Cette fonction de pondération peut être obtenue par le produit matriciel suivant :

$$\overrightarrow{F_p^0}(r) = K\,\overrightarrow{A_p^0}$$

Où $K$ est une matrice de pondération, de dimension 2N x2N, chaque terme $k_{i,j}$ de la matrice de pondération représentant le poids associé soit à l'argument, soit à la phase, de l'amplitude complexe $A_{j,p}^0(r)$ associée à la bande spectrale $\lambda_j$.

Selon ce mode de réalisation, chaque coordonnée du vecteur $\overrightarrow{A_p^0}$ représente soit le module, soit l'argument, d'une amplitude complexe, $A_{j,p}^0(r)$ dans une bande spectrale $j$.

De même que dans l'exemple précédent, la fonction de pondération est de préférence normalisée, de telle sorte que chaque terme $F_{i,p}^0$ s'exprime sous la forme :

$$|F_{i,p}^0(r)| = \frac{1}{\sum_{j=1}^3 k_{i,j}} \sum_{j=1}^3 k_{i,j}\, |A_{j,p}^0(r)|$$

et

$$Arg\left(F_{i,p}^0(r)\right) = \frac{1}{\sum_{j=4}^6 k_{i,j}} \sum_{j=4}^6 k_{i,j} \arg(A_{j,p}^0(r))$$

Quel que soit le cas de figure, les coefficients d'une matrice de pondération peuvent être préalablement déterminés, soit de façon arbitraire, soit en se basant sur des essais expérimentaux.

Par exemple, il est possible d'établir un coefficient de régression linéaire $\alpha_{ij}$ entre deux composantes i et j du vecteur $\overrightarrow{A_p^0}(r)$, en considérant une pluralité de positions axiales (r) dans le plan de l'échantillon, de façon à obtenir une statistique suffisante. Le coefficient $k_{ij}$ de la matrice de pondération peut alors être déterminé en fonction de ce coefficient de régression linéaire $\alpha_{ij}$, éventuellement affecté d'un terme tenant compte de la dispersion autour du modèle de régression linéaire. Dans un tel cas de figure, la diagonale de la matrice de pondération peut être constituée de coefficients $k_{ii}$ égaux à 1.

Cela permet d'établir une fonction de pondération $F_{i,p}^0$, associé à la longueur d'onde $\lambda_i$, prenant en compte la corrélation entre les différents termes du vecteur $\overrightarrow{A_p^0}(r)$.

Variantes concernant la source de lumière ou le photodétecteur.

Dans les exemples donnés en lien avec les figures 1 et 2, la source de lumière 11, apte à émettre une onde lumineuse 12 dans différentes bandes spectrales, comporte trois sources de lumière élémentaires $11_1$, $11_2$, $11_3$, prenant la forme de diodes électroluminescentes, émettant respectivement dans une première bande spectrale $\lambda_1$, une deuxième bande spectrale $\lambda_2$ et une troisième bande spectrale $\lambda_3$, les bandes spectrales étant différentes les unes des autres, et, de préférence, ne se recouvrant pas.

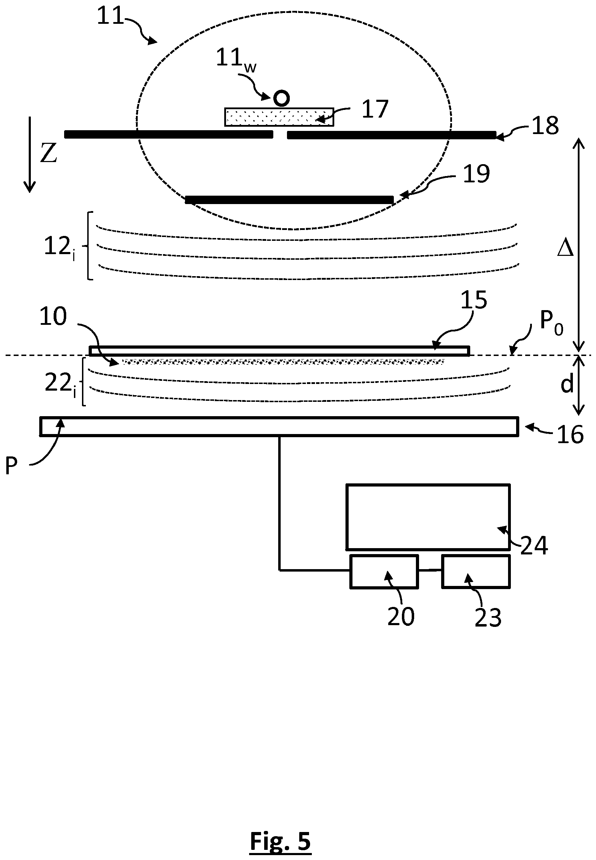

La source de lumière 11 peut également comporter une source de lumière blanche $11_w$, placée en amont d'un dispositif de filtrage 19, par exemple une roue à filtres, apte à interposer un filtre de bande passante $\lambda_i$ entre la source de lumière blanche et l'échantillon, comme représenté sur la figure 5, de telle sorte que l'image $I_i$ formée par le photodétecteur 16 soit représentative de ladite bande passante $\lambda_i$. Plusieurs filtres, présentant des bandes passantes différentes les unes des autres, sont alors successivement interposés entre la source de lumière $11_w$ et l'échantillon 10.

Selon une variante, le dispositif de filtrage 19 peut également être un filtre tribande, définissant une pluralité de bandes spectrales. Un exemple de filtre convenant à l'application est le filtre Tri-Band 458, 530 & 628 nm - Edmund Optics, définissant des bandes spectrales respectivement centrées sur les longueurs d'onde 457 nm, 530 nm et 628 nm. Cela permet une illumination de l'échantillon simultanément à l'aide de 3 longueurs d'onde.

L'utilisation d'un diffuseur 17, tel que précédemment décrit, entre la source de lumière et le diaphragme 18 est préférable, et cela quel que soit le mode de réalisation.

Le photodétecteur 16 peut, comme précédemment décrit, être un photodétecteur matriciel RGB, ce qui permet d'acquérir successivement ou simultanément différentes des images $I_1..I_i...I_N$ différentes bandes spectrales $\lambda_1..\lambda_i...\lambda_N$. Dans ce cas, la source de lumière peut être une source de lumière blanche $11_w$, auquel cas les différentes images peuvent être acquises simultanément.

Il peut également s'agir d'un photodétecteur 16 monochrome, auquel cas la source de lumière 11 est apte à générer, successivement, une onde lumineuse dans différentes bandes spectrales $\lambda_1..\lambda_i...\lambda_N$. Dans une telle configuration, la source lumineuse comporte soit plusieurs sources de lumière élémentaires $11_1$, $11_2$, $11_3$, soit un dispositif de filtrage 19, comme précédemment décrit. Dans un tel cas de figure, l'échantillon est successivement exposé à des ondes lumineuses incidentes $12_1..12_i...12_N$, N étant le nombre de bandes spectrales considérées. Une image $I_i$ ($1 \le i \le N$), représentative de l'onde lumineuse $22_i$ transmise par l'échantillon est alors acquise à chaque exposition.

Essais réalisés.

Des essais ont été réalisés selon la configuration représentée sur la figure 1 et décrite ci-dessus. L'échantillon est une lame d'anatomopathologie, comportant une coupe de colon coloré par Hematoxyline Eosine Safran. La source de lumière est disposée à une distance $\Delta$ égale à 5 cm de l'échantillon, cette distance séparant le diaphragme 18 de l'échantillon 10.

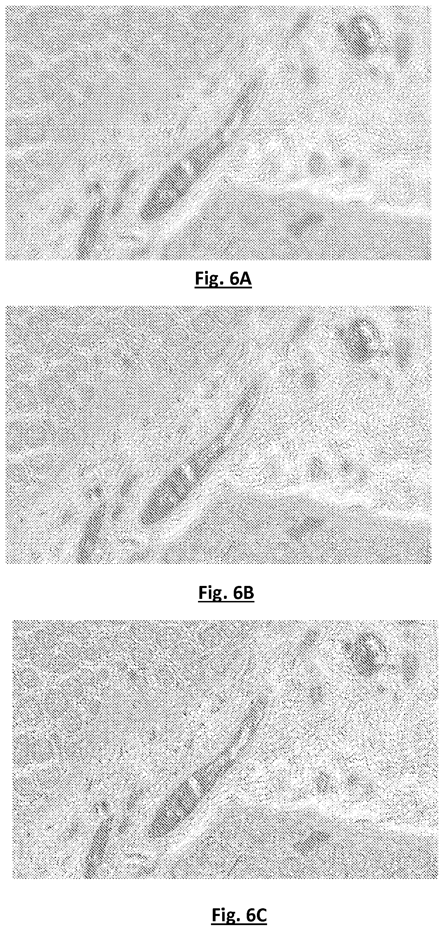

Les figures 6A, 6B et 6C représentent une image du module $\left|A_{1,p}^0(r)\right|$ de l'amplitude complexe $A_{1,p}^0(r)$ de

l'onde $22_1$ transmise par l'échantillon, dans le plan $P_0$ de l'échantillon, dans la première bande spectrale $\lambda_1$ s'étendant entre 450 et 465 nm, ces images étant obtenues après un nombre d'itérations p respectivement égal à 1, 3 et 10.

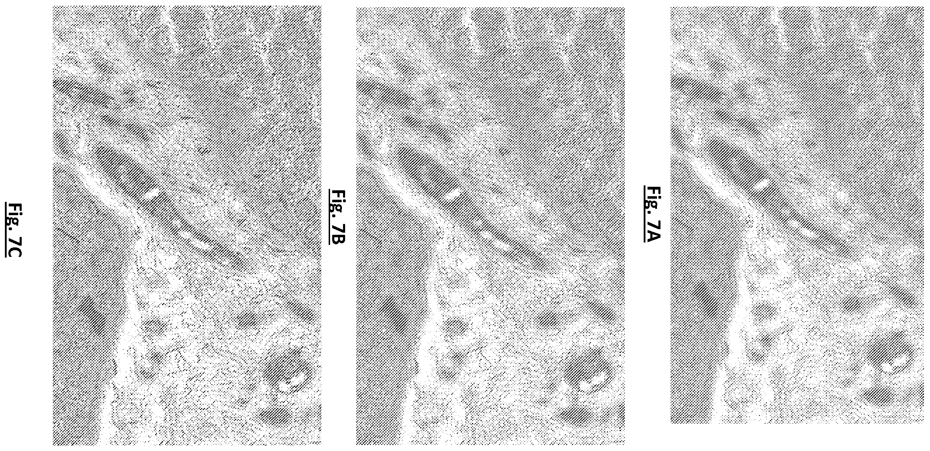

Les figures 7A, 7B et 7C représentent une image du module $\left|A_{2,p}^0(r)\right|$ de l'amplitude complexe $A_{2,p}^0(r)$ de l'onde $22_2$ transmise par l'échantillon, dans le plan $P_0$ de l'échantillon, dans la deuxième bande spectrale $\lambda_2$ s'étendant entre 520 et 535 nm, ces images étant obtenues après un nombre d'itérations p respectivement égal à 1, 3 et 10.

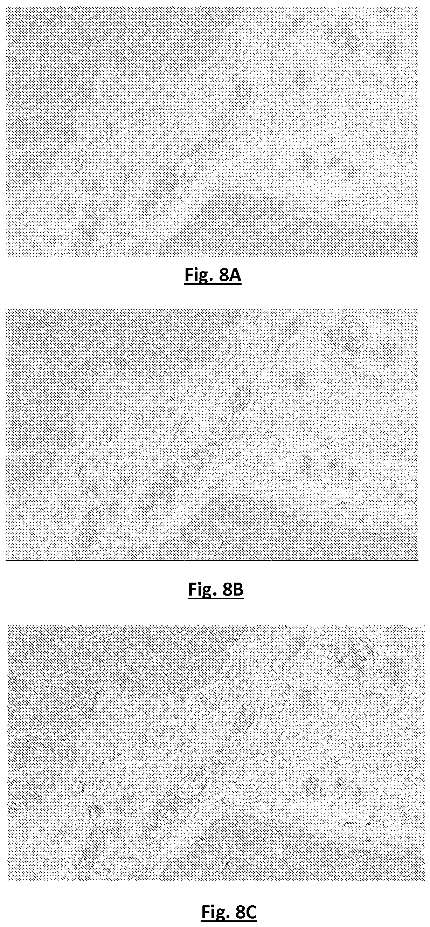

Les figures 8A, 8B et 8C représentent une image du module $\left|A_{3,p}^0(r)\right|$ de l'amplitude complexe $A_{3,p}^0(r)$ de l'onde $22_3$ transmise par l'échantillon, dans le plan $P_0$ de l'échantillon, dans la troisième bande spectrale $\lambda_3$ s'étendant entre 620 et 630 nm, ces images étant obtenues après un nombre d'itérations $p$ respectivement égal à 1, 3 et 10. On remarque que le niveau de gris moyen de ces images est plus important que le niveau de gris des images des figures 6A, 6B, 6C, 7A, 7B et 7C. Cela est dû au fait que l'échantillon à la coloration rouge-violet de l'échantillon.

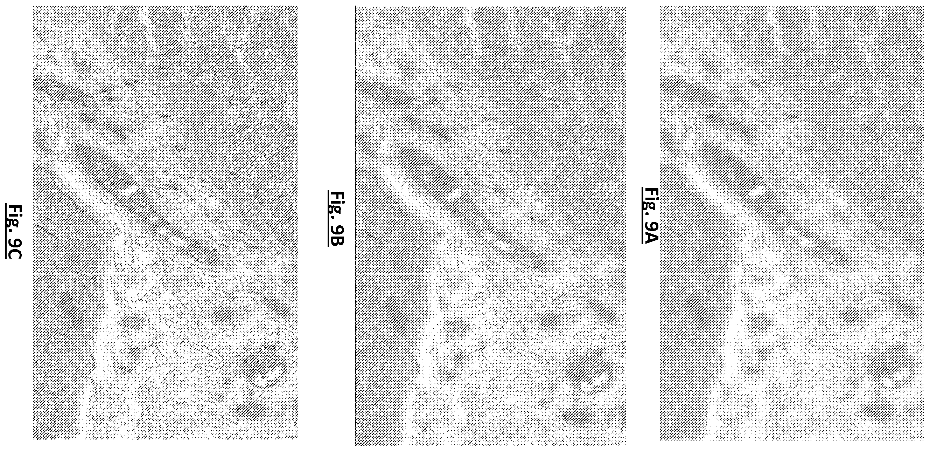

Les figures 9A, 9B et 9C représentent respectivement la combinaison des images 6A-7A-8A, 6B-7B-8B; 6C-7C-8C. Ces figures permettent d'avoir une représentation en couleur de l'échantillon, en prenant en compte simultanément les trois bandes spectrales $\lambda_1$, $\lambda_2$ et $\lambda_3$.

Sur chaque série d'images, on observe une augmentation du contraste en fonction du nombre d'itérations. On peut également constater la formation d'images dont la résolution spatiale est satisfaisante lorsque le nombre d'itérations est inférieur ou égal à 10, ce qui limite le temps de calcul à quelques secondes.

Le procédé est donc apte l'observation d'échantillons, sur champ large, et à cadences élevées. Il permet d'obtenir des images selon une ou plusieurs bandes spectrales, le rendant compatible avec les procédés de coloration couramment pratiqués dans le domaine de l'anatomocytopathologie.

**Revendications**

1. Procédé d'observation d'un échantillon (10), comportant les étapes suivantes :

   i) illumination de l'échantillon à l'aide d'une source de lumière (11), produisant une onde lumineuse (12) se propageant selon un axe de propagation (Z),
   ii) acquisition, à l'aide d'un photodétecteur (16), d'une pluralité d'images ($I_1...I_N$) de l'échantillon, formées dans un plan de détection (P), l'échantillon étant disposé entre la source de lumière (11) et le photodétecteur (16), chaque image étant représentative d'une onde lumineuse (22i), dite onde lumineuse transmise, transmise par l'échantillon sous l'effet de ladite illumination, chaque image ($I_i$) étant acquise selon une bande spectrale ($\lambda_i$) différente l'une de l'autre,

   le procédé comprenant également les étapes suivantes :

   iii) détermination, à partir de chaque image acquise ($I_i$) selon une bande spectrale ($\lambda_i$), d'une amplitude complexe initiale $(A_{i,p=1}^d(r))$ de l'onde lumineuse transmise (22i), selon ladite bande spectrale, dans ledit plan de détection (P),

   iv) rétropropagation de chaque amplitude complexe $(A_{i,p=1}^d(r), A_{i,p}^d(r))$ établie dans le plan de détection (P), selon une bande spectrale ($\lambda_i$), pour déterminer une amplitude complexe $\left(A_{i,p}^0(r)\right)$ de l'onde transmise (22i), selon chaque bande spectrale, dans un plan $P_0$ selon lequel s'étend l'échantillon,

   v) à partir de la pluralité d'amplitudes complexes $(A_{i,p}^0(r))$ déterminées lors de l'étape iv), à différentes bandes spectrales, calcul d'une fonction de pondération $(F_p^0(r), \overrightarrow{F_p^0}(r))$, dans le plan de l'échantillon ($P_0$), la fonction de pondération étant calculée à partir d'une somme pondérée desdites amplitudes complexes $(A_{i,p}^0(r))$ déterminées selon chaque bande spectrale dans le plan selon lequel s'étend l'échantillon, ou de leurs logarithmes $(\log(A_{i,p}^0(r))$ ou de leurs arguments $(arg(A_{i,p}^0(r))$, la somme pondérée mettant en œuvre des facteurs de pondérations, chaque facteur de pondération étant positif ;

vi) propagation de la fonction de pondération $(F_p^0(r), \overrightarrow{F_p^0(r)})$, dans le plan de détection (P), de façon à obtenir, pour chaque bande spectrale ($\lambda_i$), une fonction de pondération propagée $(F_{i,p}^d(r))$ dans ledit plan de détection (*P*),

vii) mise à jour de chaque amplitude complexe $(A_{i,p}^d(r))$ de l'onde lumineuse ($22_i$) transmise, selon chaque

bande spectrale ($\lambda_i$), dans le plan de détection (P), à l'aide de ladite fonction de pondération $(F_{i,p}^d(r))$ propagée, dans ladite bande spectrale ($\lambda_i$), au cours de l'étape vi),

viii) répétition des étapes iv à vii jusqu'à l'atteinte d'un critère d'arrêt.

2. Procédé selon la revendication 1, dans lequel, lors de l'étape iii), le module $(m_{i,p}^d(r))$ de l'amplitude complexe $(A_{i,p}^d(r))$ de l'onde transmise ($22_i$) dans une bande spectrale ($\lambda_i$) est déterminé en normalisant l'intensité ($I_i(r)$) de l'image ($I_i$) mesurée par le photodétecteur (16), dans ladite bande spectrale, par une intensité de référence ($I_0(r)$) mesurée par ledit photodétecteur 16 en l'absence d'échantillon.

3. Procédé selon l'une quelconque des revendications précédentes, dans lequel, lors de l'étape (iv), la détermination de l'amplitude complexe $(A_{i,p}^0(r))$ dans un plan de l'échantillon ($P_0$), dans une bande spectrale ($\lambda_i$), est obtenue en appliquant un opérateur de propagation (h), selon un axe de propagation (Z), à ladite amplitude complexe $(A_{i,p}^d(r))$, définie dans la même bande spectrale ($\lambda_i$), dans le plan de détection (P).

4. Procédé selon l'une quelconque des revendications précédentes, dans lequel, lors de l'étape vi), ladite fonction de pondération $(F_{p,i}^d(r))$, dans le plan de détection (P), est propagée en appliquant un opérateur de propagation (h), selon l'axe de propagation Z, à la fonction de pondération $(F_p^0(r), \overrightarrow{F_p^0(r)})$, déterminée, dans le plan de l'échantillon ($P_0$), au cours de l'étape v).

5. Procédé selon l'une quelconque des revendications précédentes, dans lequel, lors de l'étape vii), le module ( $|A_{i,p}^d(r)|$ ) de l'amplitude complexe $(A_{i,p}^d(r))$ de l'onde lumineuse transmise ($22_i$), selon une bande spectrale ($\lambda_i$), dans le plan de détection (P), est calculé en fonction du module ( $|A_{i,p=1}^d(r)|$ ) de l'amplitude complexe initiale ( $A_{i,p=1}^d(r)$ ), dans ladite bande spectrale ($\lambda_i$).

6. Procédé selon l'une quelconque des revendications précédentes, dans lequel, lors de l'étape vii), l'argument de l'amplitude complexe $(A_{i,p}^d(r))$ de l'onde lumineuse transmise ($22_i$), selon une bande spectrale ($\lambda_i$), dans le plan de détection (P), est calculé en fonction de l'argument de la fonction de pondération $(F_{i,p}^d(r))$ déterminée, dans ledit plan de détection et à ladite bande spectrale ($\lambda_i$), au cours de l'étape vi).

7. Procédé selon l'une quelconque des revendications précédentes, dans lequel, lors de l'étape v), la fonction de pondération $(F_p^0(r))$ est commune à l'ensemble des bandes spectrales.

8. Procédé selon l'une quelconque des revendications 1 à 6, dans lequel l'étape v) comprend la détermination d'une pluralité de fonctions de pondérations $(F_{p,i}^d(r))$ propagées, chaque fonction de pondération étant associée à une bande spectrale ($\lambda_i$).

9. Procédé selon l'une quelconque des revendications précédentes, comportant, suite à l'étape viii), l'étape

ix) : formation d'une image représentative du module ou de l'argument de l'amplitude complexe ( $A_{i,p}^d(r), A_{i,p}^0(r)$ ) de l'onde (22ᵢ), transmise par l'échantillon (10), dans le plan de l'échantillon (P₀) ou dans le plan de détection (P), selon au moins une bande spectrale (λᵢ).

10. Procédé selon l'une quelconque des revendications précédentes, dans lequel le photodétecteur comporte une matrice de pixels, au-dessus de laquelle est disposée une fenêtre de protection transparente.

11. Dispositif d'observation d'un échantillon (10) comportant :

- une source de lumière (11), adaptée à illuminer ledit échantillon,
- un photodétecteur (16), disposé dans un plan de détection, l'échantillon étant disposé entre la source de lumière (11) et le photodétecteur (16),
- le photodétecteur étant adapté à former une pluralité d'images (I₁..Iᵢ...I_N), dans le plan de détection (P), d'une onde lumineuse (22ᵢ) transmise par l'échantillon sous l'effet de l'illumination par ladite source de lumière, chaque image étant obtenue selon une bande spectrale (λᵢ) différente l'une de l'autre,
- un processeur (20), adapté à traiter ladite pluralité d'images en exécutant des instructions, programmées dans une mémoire (23), mettant en œuvre un procédé selon l'une des revendications 1 à 10.

**Patentansprüche**

1. Verfahren zur Beobachtung einer Probe (10), das die folgenden Schritte aufweist:

i) Beleuchtung der Probe mit Hilfe einer Lichtquelle (11), die eine Lichtwelle (12) erzeugt, die sich gemäß einer Ausbreitungsachse (Z) ausbreitet,
ii) Erfassung, mit Hilfe eines Photodetektors (16), einer Vielzahl von Bildern (I₁ ... I_N) der Probe, die in einer Erfassungsebene (P) geformt werden, wobei die Probe zwischen der Lichtquelle (11) und dem Photodetektor (16) angeordnet ist, wobei jedes Bild für eine Lichtwelle (22i), übertragene Lichtwelle genannt, repräsentativ ist, die von der Probe unter der Wirkung der Beleuchtung übertragen wird, wobei jedes Bild (Iᵢ) gemäß einem Spektralband (λᵢ) erfasst wird, die sich voneinander unterscheiden,

wobei das Verfahren ebenfalls die folgenden Schritte enthält:

iii) Bestimmung, ausgehend von jedem gemäß einem Spektralband (λᵢ) erfassten Bild (Iᵢ), einer komplexen Anfangsamplitude $\left(A_{i,p=1}^d(r)\right)$ der gemäß dem Spektralband in der Erfassungsebene (P) übertragenen Lichtwelle (22i),
iv) Rückausbreitung jeder komplexen Amplitude $\left(A_{i,p=1}^d(r), \ A_{i,p}^d(r)\right)$, die in der Erfassungsebene (P) gemäß einem Spektralband (λᵢ) erarbeitet wird, um eine komplexe Amplitude $\left(A_{i,p}^0(r)\right)$ der übertragenen Welle (22ᵢ) gemäß jedem Spektralband in einer Ebene P₀ zu bestimmen, gemäß der die Probe sich erstreckt,
v) ausgehend von der Vielzahl von im Schritt iv) mit verschiedenen Spektralbändern bestimmten komplexen Amplituden $\left(A_{i,p}^0(r)\right)$, Berechnung einer Gewichtungsfunktion $\left(F_p^0(r), \overrightarrow{F_p^0}(r)\right)$, in der Ebene (P₀) der Probe, wobei die Gewichtungsfunktion ausgehend von einer gewichteten Summe der komplexen Amplituden $\left(A_{i,p}^0(r)\right)$, die gemäß jedem Spektralband in der Ebene, gemäß der sich die Probe erstreckt, bestimmt werden, oder ihren Logarithmen $\left(\log(A_{i,p}^0(r)\right)$ oder ihren Argumenten $\left(\arg(A_{i,p}^0(r)\right)$ berechnet wird, wobei die gewichtete Summe Gewichtungsfaktoren einsetzt, wobei jeder Gewichtungsfaktor positiv ist;
vi) Ausbreitung der Gewichtungsfunktion $\left(F_p^0(r), \ \overrightarrow{F_p^0}(r)\right)$, in der Erfassungsebene (P), um für jedes Spek-

tralband ($\lambda_i$) eine in der Erfassungsebene (P) ausgebreitete Gewichtungsfunktion $\left(F_{i,p}^0(r)\right)$ zu erhalten,

vii) Aktualisierung jeder komplexen Amplitude $\left(A_{i,p}^d(r)\right)$ der gemäß jedem Spektralband ($\lambda_i$) in der Erfassungsebene (P) übertragenen Lichtwelle (22i) mit Hilfe der in dem Spektralband ($\lambda_i$) während des Schritts vi) ausgebreiteten Gewichtungsfunktion $\left(F_{i,p}^d(r)\right)$,

viii) Wiederholung der Schritte iv bis vii bis zum Erreichen eines Anhaltekriteriums.

2. Verfahren nach Anspruch 1, wobei im Schritt iii) das Modul $\left(m_{i,p}^d(r)\right)$ der komplexen Amplitude $\left(A_{i,p}^d(r)\right)$ der in einem Spektralband ($\lambda_i$) übertragenen Welle (22i) durch Normieren der vom Photodetektor (16) gemessenen Intensität ($I_i(r)$) des Bilds ($I_i$) im Spektralband durch eine Bezugsintensität ($I_0(r)$) bestimmt wird, die vom Photodetektor (16) in Abwesenheit einer Probe gemessen wird.

3. Verfahren nach einem der vorhergehenden Ansprüche, wobei im Schritt (iv) die Bestimmung der komplexen Amplitude $\left(A_{i,p}^0(r)\right)$ in einer Ebene ($P_0$) der Probe in einem Spektralband ($\lambda_i$) durch Anwenden eines Ausbreitungsoperators (h) gemäß einer Ausbreitungsachse (Z) an die komplexe Amplitude $\left(A_{i,p}^d(r)\right)$ erhalten wird, die im gleichen Spektralband ($\lambda_i$) in der Erfassungsebene (P) definiert wird.

4. Verfahren nach einem der vorhergehenden Ansprüche, wobei im Schritt vi) die Gewichtungsfunktion $\left(F_{p,i}^d(r)\right)$ in der Erfassungsebene (P) durch Anwendung eines Ausbreitungsoperators (h) gemäß der Ausbreitungsachse Z an die Gewichtungsfunktion $\left(F_p^0(r), \overrightarrow{F_p^0}(r)\right)$, ausgebreitet wird, die in der Ebene ($P_0$) der Probe während des Schritts v) bestimmt wird.

5. Verfahren nach einem der vorhergehenden Ansprüche, wobei im Schritt vii) das Modul ( $\left|A_{i,p}^d(r)\right|$ ) der komplexen Amplitude $\left(A_{i,p}^d(r)\right)$ der gemäß einem Spektralband ($\lambda_i$) in der Erfassungsebene (P) übertragenen Lichtwelle (22i) abhängig vom Modul ( $\left|A_{i,p=1}^d(r)\right|$ ) der komplexen Anfangsamplitude $\left(A_{i,p=1}^d(r)\right)$ im Spektralband ($\lambda_i$) berechnet wird.

6. Verfahren nach einem der vorhergehenden Ansprüche, wobei im Schritt vii) das Argument der komplexen Amplitude $\left(A_{i,p}^d(r)\right)$ der gemäß einem Spektralband ($\lambda_i$) in der Erfassungsebene (P) übertragenen Lichtwelle (22i) abhängig vom Argument der im Schritt vi) in der Erfassungsebene und mit dem Spektralband ($\lambda_i$) bestimmten Gewichtungsfunktion $\left(F_{i,p}^d(r)\right)$ berechnet wird.

7. Verfahren nach einem der vorhergehenden Ansprüche, wobei im Schritt v) die Gewichtungsfunktion $\left(F_p^0(r)\right)$ der Gesamtheit der Spektralbänder gemeinsam ist.

8. Verfahren nach einem der Ansprüche 1 bis 6, wobei der Schritt v) die Bestimmung einer Vielzahl von ausgebreiteten Gewichtungsfunktionen $\left(F_{p,i}^d(r)\right)$ enthält, wobei jede Gewichtungsfunktion einem Spektralband ($\lambda_i$) zugeordnet ist.

9. Verfahren nach einem der vorhergehenden Ansprüche, das nach dem Schritt viii) den Schritt aufweist

ix) Formen eines Bilds, das für das Modul oder das Argument der komplexen Amplitude $\left(A_{i,p}^d(r), A_{i,p}^0(r)\right)$, der von der Probe (10) in der Ebene ($P_0$) der Probe oder in der Erfassungsebene (P) gemäß mindestens einem Spektralband ($\lambda_i$) übertragen Welle (22i) repräsentativ ist.

**10.** Verfahren nach einem der vorhergehenden Ansprüche, wobei der Photodetektor eine Matrix von Pixeln aufweist, über der ein transparentes Ausbreitungsfenster angeordnet ist.

**11.** Vorrichtung zur Beobachtung einer Probe (10), die aufweist:

- eine Lichtquelle (11), die geeignet ist, die Probe zu beleuchten,
- einen Photodetektor (16), der in einer Erfassungsebene angeordnet ist, wobei die Probe zwischen der Lichtquelle (11) und dem Photodetektor (16) angeordnet ist,
- wobei der Photodetektor geeignet ist, in der Erfassungsebene (P) einer Lichtwelle (22i) eine Vielzahl von Bildern ($I_1 ... I_i ... I_N$) zu formen, die von der Probe unter der Wirkung der Beleuchtung durch die Lichtquelle übertragen wird, wobei jedes Bild gemäß einem Spektralband ($\lambda_i$) erhalten wird, die sich voneinander unterscheiden,
- einen Prozessor (20), der geeignet ist, die Vielzahl von Bildern zu verarbeiten, indem er in einem Speicher (23) programmierte Anweisungen ausführt, indem er ein Verfahren nach einem der Ansprüche 1 bis 10 durchführt.

**Claims**

**1.** Method for observing a sample (10), comprising the following steps:

i) illuminating the sample using a light source (11), which produces a light wave (12) that propagates along a propagation axis (Z),
ii) acquiring, using a photodetector (16), a plurality of images ($I_1...I_N$) of the sample, said images being formed in a detection plane (P), the sample being placed between the light source (11) and the photodetector (16), each image being representative of a light wave (22i), called the transmitted light wave, transmitted by the sample under the effect of said illumination, each image ($I_i$) being acquired in a spectral band ($\lambda_i$) different from the others,

the method also comprising the following steps:

iii) determining, on the basis of each image ($I_i$) acquired in a spectral band (Ai), an initial complex amplitude $\left(A_{i,p=1}^{d}(r)\right)$ of the transmitted light wave (22i), in said spectral band, in said detection plane (P),

iv) back propagating each complex amplitude $\left(A_{i,p=1}^{d}(r), A_{i,p}^{d}(r)\right)$, established in the detection plane (P), in a spectral band (Ai), to determine a complex amplitude $\left(A_{i,p}^{0}(r)\right)$ of the transmitted wave (22i), in each spectral band, in a plane ($P_0$) in which the sample lies,

v) on the basis of the plurality of complex amplitudes $\left(A_{i,p}^{0}(r)\right)$ determined in step iv), in various spectral bands, computing a weighting function $\left(F_p^0(r), \overrightarrow{F_p^0}(r)\right)$, in the plane of the sample ($P_0$), the weighting function being computed on the basis of a weighted sum of said complex amplitudes $\left(A_{i,p}^{0}(r)\right)$ determined in each spectral band in the plane in which the sample lies, or of their logarithms $\left(log\left(A_{i,p}^{0}(r)\right)\right)$ or of their arguments $\left(arg\left(A_{i,p}^{0}(r)\right)\right)$, the weighted sum employing weighting factors, each weighting factor being positive,

vi) propagating the weighting function $\left(F_p^0(r), \overrightarrow{F_p^0}(r)\right)$, to the detection plane (P), so as to obtain, for each spectral band (Ai), a propagated weighting function $\left(F_{i,p}^{d}(r)\right)$ in said detection plane (P),

vii) updating each complex amplitude $\left(A_{i,p}^{d}(r)\right)$ of the transmitted light wave (22i), in each spectral band (Ai), in the detection plane (P), using said propagated weighting function $(F_{i,p}^d(r))$, in said spectral band (Ai), in step vi),

viii) repeating steps iv to vii until a stop criterion is met.

2. Method according to Claim 1, wherein, in step iii), the modulus $(m_{i,p}^d(r))$ of the complex amplitude $(A_{i,p}^d(r))$ of the transmitted wave (22i) in a spectral band $(\lambda_i)$ is determined by normalizing the brightness $(I_i(r))$ of the image $(I_i)$ measured by the photodetector (16), in said spectral band, by a reference brightness $(I_0(r))$ measured by said photodetector (16) in the absence of a sample.

3. Method according to any one of the preceding claims, wherein, in step iv), the complex amplitude $(A_{i,p}^0(r))$ in a sample plane $(P_0)$, in a spectral band $(\lambda_i)$, is determined by applying a propagation operator (h), of propagation along a propagation axis (Z), to said complex amplitude $(A_{i,p}^d(r))$ defined, in the same spectral band (Ai), in the detection plane (P).

4. Method according to any one of the preceding claims, wherein, in step vi), said weighting function $(F_{p,i}^d(r))$, in the detection plane (P), is propagated by applying a propagation operator (h), of propagation along the propagation axis (Z), to the weighting function $(F_p^0(r), \overrightarrow{F_p^0}(r))$, determined, in the sample plane $(P_0)$, in the course of step v).

5. Method according to any one of the preceding claims, wherein, in step vii), the modulus ( $\left|A_{i,p}^d(r)\right|$ ) of the complex amplitude $(A_{i,p}^d(r))$ of the transmitted light wave (22i), in a spectral band (Ai), in the detection plane (P), is computed depending on the modulus ( $\left|A_{i,p=1}^d(r)\right|$ ) of the initial complex amplitude $(A_{i,p=1}^d(r))$, in said spectral band $(\lambda_i)$.

6. Method according to any one of the preceding claims, wherein, in step vii), the argument of the complex amplitude $(A_{i,p}^d(r))$ of the transmitted light wave (22i), in a spectral band (Ai), in the detection plane (P), is computed depending on the argument of the weighting function $(F_{i,p}^d(r))$ determined, in said detection plane and in said spectral band (Ai), in the course of step vi).

7. Method according to any one of the preceding claims, wherein, in step v), the weighting function $(F_p^0(r))$ is common to all of the spectral bands.

8. Method according to any one of Claims 1 to 6, wherein step v) comprises determining a plurality of propagated weighting functions $(F_{p,i}^d(r))$, each weighting function being associated with one spectral band $(\lambda_i)$.

9. Method according to any one of the preceding claims, comprising, following step viii), the step

ix) forming an image representative of the modulus or of the argument of the complex amplitude $(A_{i,p}^d(r), A_{i,p}^0(r))$, of the wave (22i), transmitted by the sample (10), in the sample plane $(P_0)$ or in the detection plane (P), in at least one spectral band $(\lambda_i)$.

10. Method according to any one of the preceding claims, wherein the photodetector comprises a pixel matrix array, above which is placed a transparent protective window.

11. Device for observing a sample (10), comprising:

- a light source (11), suitable for illuminating said sample,
- a photodetector (16), placed in a detection plane, the sample being placed between the light source (11) and the photodetector (16),
- the photodetector being suitable for forming a plurality of images ($I_1...I_1... I_N$), in the detection plane (P), of a light wave (22i) transmitted by the sample under the effect of illumination by said light source, each image being obtained in a spectral band ($\lambda_i$) different from the others,
- a processor (20), suitable for processing said plurality of images by executing instructions, programmed into a memory (23), that implement a method according to one of Claims 1 to 10.

**Fig. 1**

**Fig. 2**

**Fig. 3**

**Fig. 4**

**Fig. 5**

**Fig. 6A**

**Fig. 6B**

**Fig. 6C**

**Fig. 7A**

**Fig. 7B**

**Fig. 7C**

**Fig. 8A**

**Fig. 8B**

**Fig. 8C**

Fig. 9A

Fig. 9B

Fig. 9C

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008090330 A
- US 20120218379 A
- WO 2014035238 A
- WO 2015015023 A

**Littérature non-brevet citée dans la description**

- Lensless phase contrast microscopy based on multiwavelength Fresnel diffraction. Optics Letters. 15 Janvier 2014, vol. 39
- **BAO P.** Optical surface profile measurement using phase retrieval by tuning the illumination wavelenght. *Optics Communications,* 2012, vol. 285, 5029-5036